# NOUVEAU FASCICULE DE BREVET EUROPEEN

(11) **EP 2 992 236 B2**
(45) Date de publication et mention de la décision concernant l'opposition: **26.11.2025**
(45) Mention de la délivrance du brevet: 09.08.2017
(21) Numéro de dépôt: 14718982.3
(22) Date de dépôt: 23.04.2014
(51) Int. Cl.: F16D 65/097, F16D 55/228, F16D 121/02

(54) **FREIN À DISQUE À ÉTRIER FIXE ET À PATINS DE FREIN STABILISÉS, ET PROCÉDÉS ASSOCIÉS D'ASSEMBLAGE ET DE REMPLACEMENT D'UN PATIN**
SCHEIBENBREMSE MIT FESTEM BREMSSATTEL UND STABILISIERTEN BREMSBELÄGEN SOWIE ZUGEHÖRIGE MONTAGE- UND BELAGWECHSELVERFAHREN
FIXED CALIPER DISK BRAKE HAVING STABILIZED BRAKE PADS, AND RELATED ASSEMBLY AND PAD REPLACEMENT METHODS

(30) Priorité: 29.04.2013 FR 1353906; 18.11.2013 FR 1361275
(43) Date de publication de la demande: 09.03.2016
(73) Titulaire: Chassis Brakes International B.V., 5656 AG Eindhoven (NL)
(72) Inventeur: MERRIEN, Sandra, F-75020 Paris (FR); GAYE, André, Dalian 116600 (CN); BINDNER, Thierry, 67000 Strasbourg (FR)
(74) Mandataire: Santarelli
(86) Numéro de dépôt international: PCT/EP2014/058169
(87) Numéro de publication internationale: WO 2014/177428

(56) Documents cités:
- EP-A1- 2 072 850
- WO-A1-2005/064193
- WO-A1-2005/064194
- FR-A1- 2 969 238

## Description

### DOMAINE TECHNIQUE DE L'INVENTION

L'invention se rapporte à un frein à disque de véhicule automobile à étrier fixe.

### ARRIERE PLAN TECHNIQUE DE L'INVENTION

L'invention se rapporte à un frein à disque de véhicule automobile à étrier fixe comportant :
- un disque,
- un boîtier d'étrier qui chevauche le disque,
- au moins un patin de frein qui est apte à coopérer avec une face latérale en vis à vis du disque de frein,
- et au moins un piston qui est monté coulissant axialement dans un cylindre complémentaire du boîtier et qui coopère avec ledit patin de frein pour le solliciter axialement en direction de ladite face latérale,
et dans lequel le boîtier d'étrier comporte, associés audit au moins un patin de frein, des moyens de montage et de guidage en coulissement axial de ce patin de frein par rapport au boîtier.

D'une manière générale, dans un frein à disque à étrier fixe, le composant principal est le boîtier de l'étrier qui est un composant solidaire d'une partie du véhicule, par exemple d'une fusée avant, et qui chevauche radialement la périphérie extérieure d'un disque de frein tournant lié en rotation à une roue à freiner.

De part et d'autre du disque, des cylindres hydrauliques (au moins un de chaque côté du disque) dans lesquels des pistons se déplace en coulissement axial, sont formés dans le boîtier de l'étrier.

Des patins de frein, le plus généralement au nombre de deux, sont placés chacun entre au moins un piston et la face annulaire en vis-à-vis du disque, et une pression hydraulique introduite dans les cylindres applique le ou les pistons sur la face en vis-à-vis du patin de frein et, en conséquence, sur le disque.

De manière connue, le boîtier de l'étrier est généralement réalisé en deux parties, ou deux pièces, boulonnées ou vissées entre elles, des alésages borgnes étant usinés dans chacune de ces deux parties pour constituer les cylindres recevant les pistons.

Chaque patin de frein est logé et guidé en coulissement axial dans des logements associés et opposés qui, pour chaque patin de frein, sont formés dans la partie, ou demi-boîtier, associée.

Des faces de chaque logement sont conçues pour guider le patin de frein associé en le maintenant en position et en lui servant d'ancrage.

La conception des moyens de montage et de guidage en coulissement axial du patin de frein par rapport au boîtier est particulièrement déterminante pour le bon fonctionnement d'un tel frein, et notamment pour résoudre différents problèmes et par exemple pour éviter l'apparition de bruits parasites de chocs, audibles par le conducteur du véhicule, lors du contact entre le patin de frein et les parties associées du boîtier d'étrier. Le document WO2005/064194 A1 montre un frein à disque d'après le préambule de la revendication 1.

### BREF RESUME DE L'INVENTION

L'invention propose une nouvelle conception d'un frein à étrier fixe comportant :
- un disque,
- un boîtier d'étrier qui chevauche le disque,
- au moins un patin de frein qui est apte à coopérer avec une face latérale en vis à vis du disque de frein,
- et au moins un piston qui est monté coulissant axialement dans un cylindre complémentaire du boîtier et qui coopère avec ledit patin de frein pour le solliciter axialement en direction de ladite face latérale du disque frein,
et dans lequel :
a) le boîtier d'étrier comporte deux blocs opposés, avant et arrière respectivement, dont chacun comporte :
   - un logement axial à section en forme de C, ouvert horizontalement en direction du bloc opposé, qui est délimité par une face supérieure et par une face inférieure d'orientation générale horizontale ;
   - une surface axiale de reprise d'appui, d'orientation générale verticale, qui est agencée sous le logement ;
b) le patin de frein comporte :
   - deux oreilles latérales opposées de montage dont chacune est reçue dans un logement associé d'un bloc associé du boîtier de l'étrier, et dont chacune est délimitée par une facette supérieure d'orientation générale horizontale ;
   - associée à chaque oreille, une facette inférieure, d'orientation verticale, qui est située en dessous de l'oreille latérale associée ;
c) des moyens de montage et de guidage en coulissement axial du patin de frein par rapport au boîtier fixe sont prévus qui comportent :
   i) pour chaque oreille du patin de frein, un ressort de patin qui est fixé à l'oreille associée du patin de frein et qui comporte au moins une branche inférieure de glissement qui coopère avec la face inférieure du logement associé et qui sollicite ladite facette supérieure de l'oreille en appui verticalement vers le haut contre la face supérieure du logement associé ;
   ii) pour chaque bloc du boîtier de l'étrier, un élément lamellaire en acier à ressort, qui comporte au moins :
      - une partie supérieure axiale de glissement à section en forme de C qui est reçue et verrouillée dans le logement (16) associé, qui comporte une première aile inférieure, dite aile de glissement, d'orientation générale sensiblement horizontale, qui est interposée entre la branche de glissement du ressort de patin et la face inférieure du logement de l'étrier, et une deuxième aile supérieure, dite aile d'appui vertical, d'orientation générale horizontale, qui est interposée entre la facette supérieure de l'oreille associée du patin de frein et la face supérieure du logement associé ; et
      - au moins une partie inférieure axiale d'appui comportant une troisième aile, dite aile d'appui transversal, qui prolonge l'aile de glissement, qui s'étend dans un plan orthogonal au plan de l'aile de glissement, qui est agencée au contact de la surface de reprise d'appui transversal du bloc associé, et qui est à apte à former une butée transversale pour la facette inférieure associée du patin de frein.

En outre, l'élément lamellaire est déformable élastiquement entre :
- un état initial, préalable au montage dans le logement de l'oreille du patin de frein munie de son ressort de patin, dans lequel l'aile de glissement forme, avec le plan de la face inférieure du logement, un premier angle aigu,
- au moins un état de sollicitation, consécutif au montage dans le logement de l'oreille du patin de frein munie de son ressort de patin, dans lequel l'aile de glissement forme, avec le plan de la face inférieure du logement, un deuxième angle aigu ou nul, dont la valeur est inférieure à celle du premier angle aigu, et dans lequel ladite branche de glissement du ressort de patin est précontrainte élastiquement.

Selon d'autres caractéristiques de l'invention :
- l'aile de glissement comporte une languette d'ancrage qui fait saillie vers le bas et qui coopère avec la face inférieure du logement pour s'ancrer dans cette face inférieure et verrouiller la partie supérieure en position montée dans le logement associé ;
- la face inferieure du logement comporte un évidement dans lequel la languette d'ancrage est reçue, sans jeu selon la direction axiale, pour immobiliser axialement l'élément lamellaire par rapport au bloc ;
- l'élément lamellaire comporte une partie d'immobilisation axiale, qui prolonge la deuxième aile d'appui vertical vers le haut, qui coopère avec une partie complémentaire du bloc pour immobiliser axialement l'élément lamellaire par rapport au bloc ;
- une arête de raccordement de l'aile de glissement avec l'aile d'appui transversal comporte au moins une découpe axiale ;
- l'élément lamellaire présente une symétrie de conception par rapport à un plan vertical et transversal médian ;
- chaque ressort de patin comporte au moins une branche incurvée qui s'étend suivant la direction axiale et qui relie sa branche de glissement à une branche de fixation du patin de frein sur l'oreille du patin de frein ;
- le boîtier d'étrier comporte deux demi-boîtiers dont chacun est délimité par une face de jonction, d'orientation verticale et transversale, et les deux demi-boîtiers sont fixés l'un à l'autre par une série de vis axiales de fixation ;
- le boîtier d'étrier et les moyens de montage et de guidage des patins de frein présentent une symétrie générale de conception par rapport à ladite face de jonction.

L'invention se rapporte aussi à un procédé d'assemblage d'un frein à disque du type décrit précédemment, caractérisé en ce qu'il comporte :
- une première étape au cours de laquelle on verrouille les éléments lamellaires dans les logements associés des blocs de l'étrier,
- une deuxième étape au cours de laquelle on fixe les ressorts de patin au patin de frein, les branches incurvées étant agencées d'un même côté du patin de frein,
- une troisième étape au cours de laquelle on introduit le patin de frein équipé de ses deux ressorts de patin dans les logements des blocs de l'étrier en faisant pénétrer en premier les branches incurvées des ressorts de patin pour que lesdites branches desdits ressorts de patin sollicitent les éléments lamellaires associés en écartant les première ailes inférieures de glissement des deuxièmes ailes d'appui vertical.

L'invention se rapporte encore à un procédé de remplacement d'un patin de frein d'un frein à disque du type décrit précédemment, caractérisé en ce qu'il comporte :
- une première étape au cours de laquelle on comprime les branches incurvées des ressorts de patin,
- une deuxième étape au cours de laquelle on extrait le patin de frein muni de ses ressorts de patin hors des logements des blocs de l'étrier,
- une troisième étape au cours de laquelle on introduit un nouveau patin de frein dont les oreilles sont équipées de deux ressorts de patin dans les logements des blocs de l'étrier en faisant pénétrer en premier les branches incurvées des ressorts de patin pour que lesdites branches desdits ressorts de patin (40) sollicitent les éléments lamellaires en en écartant les premières ailes inférieures de glissement des deuxième ailes d'appui vertical.

### BREF RESUME DES FIGURES

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui illustre un demi-boîtier d'un étrier fixe d'un frein à disque selon l'invention, qui est représenté « nu », c'est-à-dire sans aucun composant ou équipement;
- la figure 2 est une vue schématique de dessus qui illustre l'assemblage boulonné de deux demi-boîtiers du type de celui représenté à la figure 1 ;
- la figure 3 est une vue en perspective à plus grande échelle d'un détail de la figure 1 ;
- la figure 4 est une vue similaire à celle de la figure 3 sur laquelle le logement est équipé de son élément lamellaire associé ;
- les figures 5 et 6 sont deux vues en perspective, selon des angles différents, de l'élément lamellaire qui représenté en position montée à la figure 4 ;
- la figure 7 est une vue en section par un plan vertical et transversal passant par le milieu de l'élément lamellaire représenté à la figure 4 et sur laquelle l'élément lamellaire est représenté dans le logement dans son état initial ;
- la figure 8 est une vue analogue à celle de la figure 7 dans laquelle l'élément lamellaire est représenté dans le logement dans son état de sollicitation par le patin de frein associé ;
- la figure 9 est une vue analogue à celle de la figure 1 sur laquelle le demi-boîtier est représenté équipé de ses différents composants et éléments lamellaires, avant le montage du patin de frein associé ;
- la figure 10 est une vue en perspective d'un patin de frein qui est destiné à être monté dans le demi-boîtier de la figure 9, et qui est équipé de ses deux ressorts de patin ;
- la figure 11 est une vue en coupe, par un plan vertical axial, illustrant le montage d'un ressort de patin sur une oreille du patin de frein de la figure 10 ;
- la figure 12 est une vue en perspective illustrant la conception du ressort de patin représenté à la figure 11 ;
- la figure 13 est une vue analogue à celle de la figure de la figure 9 sur laquelle le demi-boîtier est représenté équipé du patin de frein de la figure 10 ;
- les figures 14 et 15 sont des vues de détail illustrant une variante de réalisation de l'élément lamellaire et du bloc associé du demi-boîtier apte à recevoir cette variante de l'élément lamellaire.

### DESCRIPTION DETAILLEE DES FIGURES

Dans la description et les revendications qui suivent, on utilisera à titre non limitatif les expressions telles que orientations « axiale », « transversale » et « verticale » en référence au trièdre (L, T, V) représenté aux figures et aux définitions données dans la description, et sans référence à la gravité terrestre.

Dans la description qui va suivre, des chiffres de référence identiques désignent des pièces identiques ou ayant des fonctions similaires.

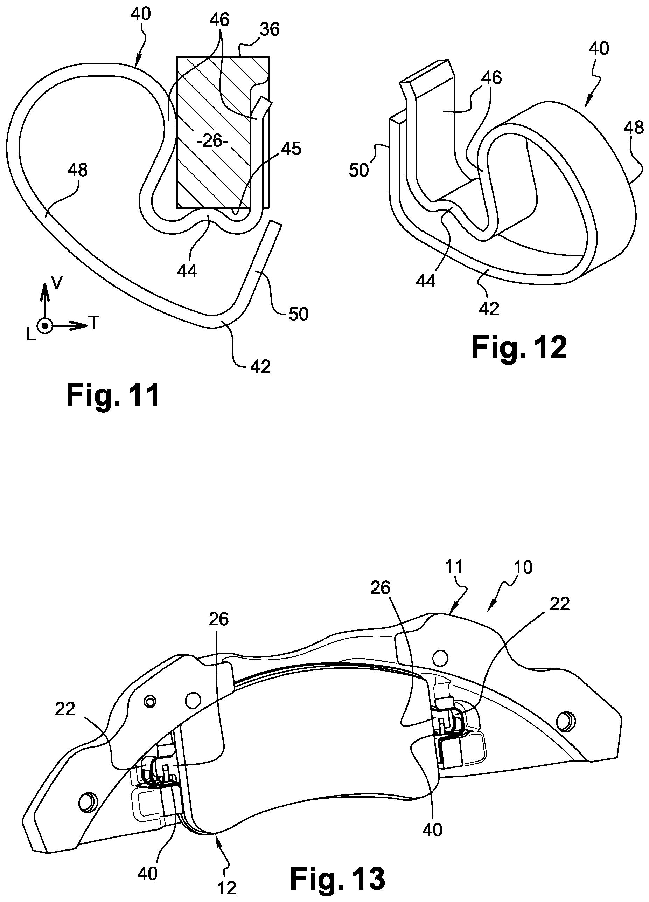

On a représenté à la figure 13 un montage d'un patin de frein 12 dans un étrier fixe 10 d'un frein à disque.

De manière connue, l'étrier 10 comporte un boîtier d'étrier 11 en deux parties, de conception générale identique ou similaire s'agissant du montage et du guidage en coulissement axial d'un patin de frein 12 associé à chaque partie ou demi-boîtier, et s'agissant de l'actionnement des patins de frein 12.

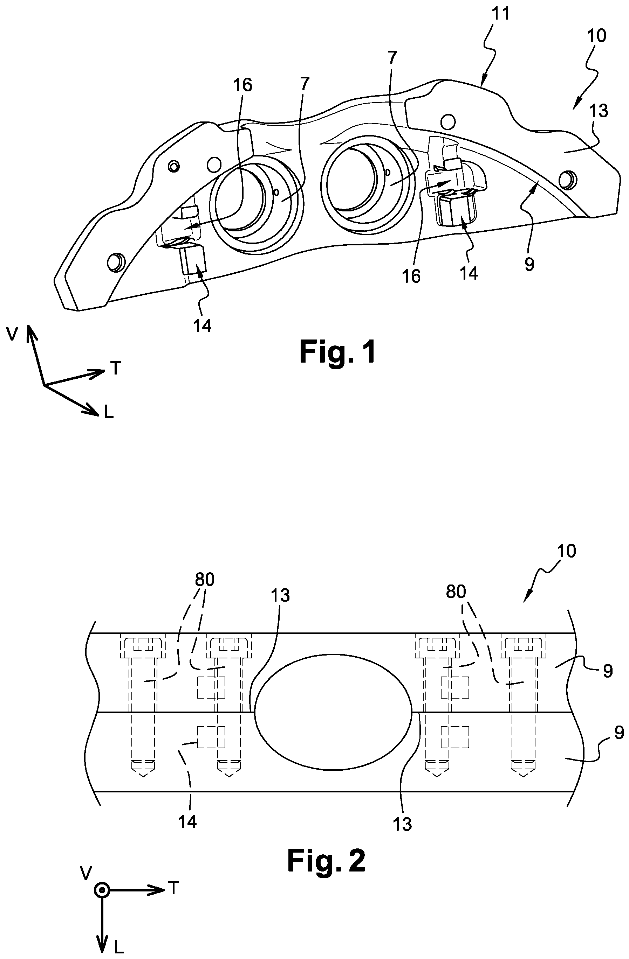

Comme cela est représenté schématiquement à la figure 2, le boîtier d'étrier 11 comporte deux demi-boîtiers dont chacun est délimité par une face de jonction 13, d'orientation verticale et transversale.

Le boîtier d'étrier 11 et les moyens de montage et de guidage des patins de frein 12 présentent une symétrie générale de conception par rapport cette face de jonction 13.

Les deux demi-boîtiers sont fixés l'un à l'autre par une série de vis axiales 80 de fixation que l'on peut voir à la figure 2.

Le boîtier d'étrier, de manière connue, comporte pour l'essentiel deux parois latérales verticales 5 d'orientation transversale qui sont reliées entre elles par une voute supérieure incurvée 9 de manière à délimiter un espace intérieure apte à recevoir en rotation la périphérie radiale d'un disque de frein associé (non représenté).

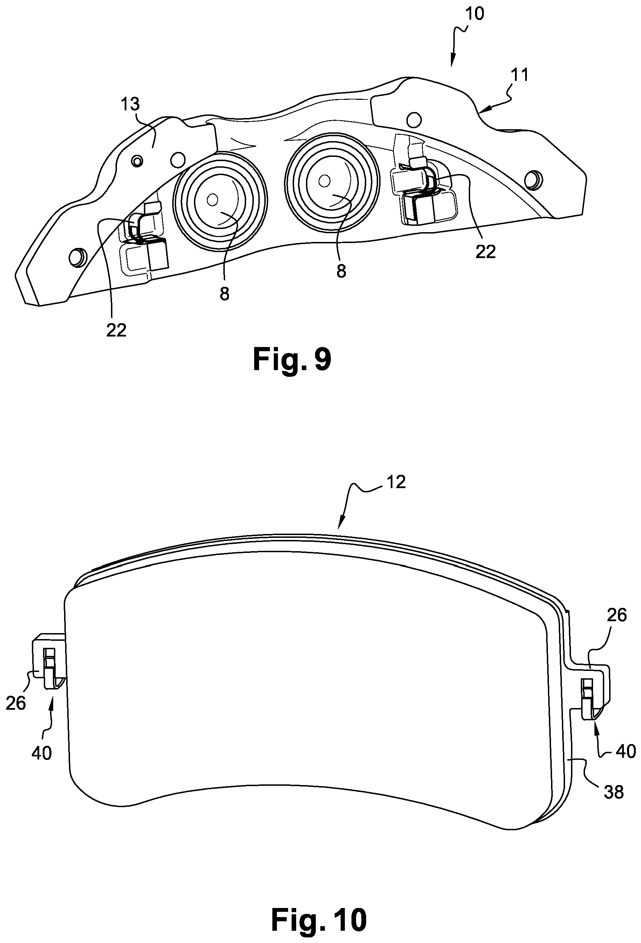

Chaque paroi 5 est délimitée par une face interne globalement plane 6 dans laquelle débouchent ici deux alésages borgnes axiaux et parallèles 7 dans chacun desquels un piston 8 est monté coulissant pour constituer deux paires d'ensembles cylindre-piston pour l'actionnement des patins de frein 12 (voir figures 1, 9).

Chaque demi-boîtier comporte au moins deux blocs opposés 14 dont chacun est formé en relief par rapport au plan de la face interne 6 et s'étend axialement en saillie vers l'intérieur.

Chaque bloc 14 comporte un logement 16 orienté axialement selon la direction "L", présentant une section en forme de C ouvert horizontalement en direction du bloc 14 opposé. Chaque logement 16s'étend axialement sensiblement sur toute la profondeur axiale du bloc 14, et donc sensiblement jusqu'au plan de la paroi interne 5.

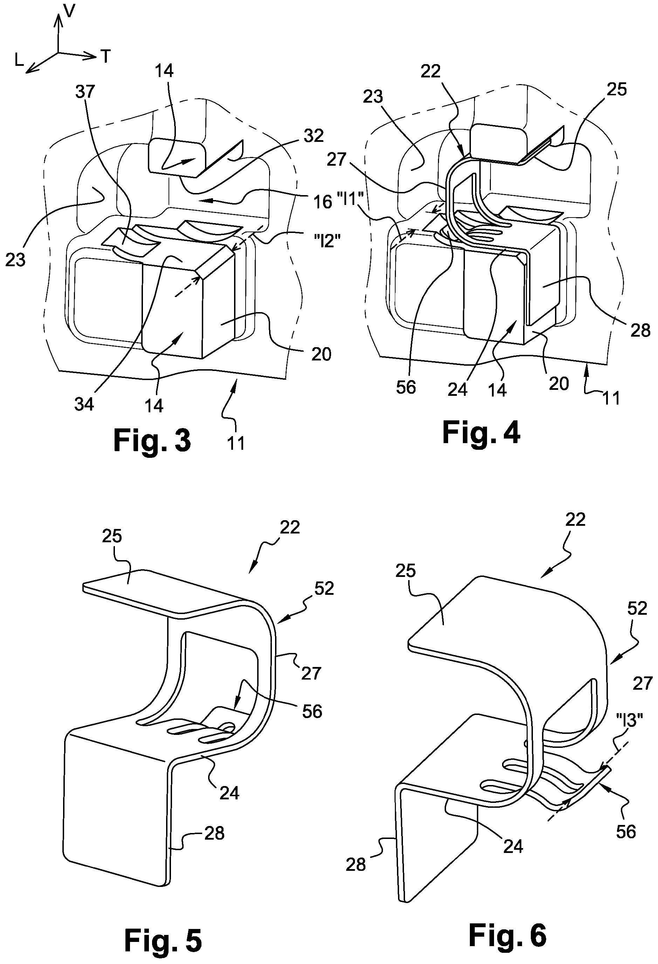

Comme représenté aux figures 3 et 4, chaque bloc 14 comporte un logement 16 axial à section en forme de C ouvert horizontalement en direction du bloc opposé et qui est délimité par une face 32 supérieure et par une face inférieure 34 d'orientation générale horizontale, et il comporte une surface 20 axiale de reprise d'appui, d'orientation générale verticale agencée sous le logement 16.

Le frein comporte ici deux patins de frein opposés 12 dont chacun comporte deux oreilles 26 latérales opposées de montage dont chacune est reçue dans un logement 16 associé d'un bloc 14 associé du boîtier 11 de l'étrier 10.

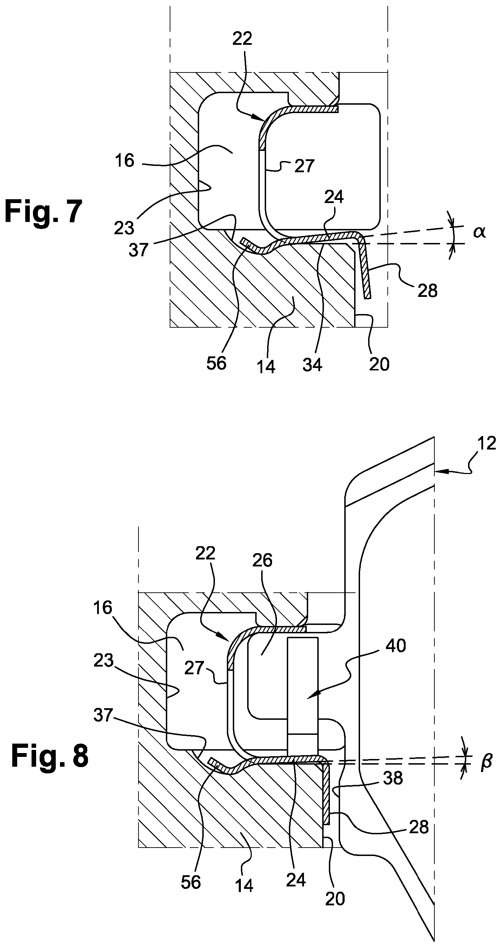

Comme représenté aux figures 8, 10 et 11, chaque oreille 26 de chaque patin de frein 12 est délimitée par une facette supérieure 36 d'orientation générale horizontale. Par ailleurs, pour chaque patin de frein 12, une facette inférieure 38 d'orientation verticale est située en dessous de l'oreille 26 latérale associée.

Par ailleurs, un ressort 40 de patin de frein est ici fixé à chaque oreille associée 26 du patin de frein 12.

Chaque ressort de patin 40 comporte au moins une branche inférieure 42 de glissement qui coopère avec la face inférieure 34 du logement associé 16, et qui sollicite la facette supérieure 36 de l'oreille en appui verticalement vers le haut contre la face supérieure 32 horizontale du logement 16.

Comme l'illustre les figures 11 et 12, un tel ressort de patin 40 est communément appelé "ressort escargot" et il peut aussi comporter, de manière non limitative de l'invention, une branche supérieure 44 prenant appui sous une facette inférieure horizontale 45 de l'oreille 26 associée du patin de frein 12. Cette branche supérieure 44 fait partie d'une branche de fixation, ou agrafe, 46 qui pince élastiquement l'oreille 26 associée du patin de frein 12 pour assurer la fixation du ressort de patin 40 sur l'oreille 26 associée.

Le ressort de patin 40 comporte encore une branche incurvée 48 qui relie la branche de fixation 46 à la branche inférieure 42 de glissement. Cette branche incurvée 48 assure principalement l'élasticité du ressort de patin 40.

Le ressort de patin 40 comporte enfin une branche libre 50 qui prolonge la branche inférieure 42 de glissement et qui ferme le profil de manière à éviter l'entrelacement des ressorts stockés avant leur montage sur les patins de frein.

Chaque oreille 26 est ici reçue dans un logement 16 associé avec interposition d'un élément lamellaire 22 en acier à ressort associé à chaque bloc 14 du boîtier 11 de l'étrier 10.

Comme l'illustrent plus particulièrement les figures 5 et 6, un tel élément lamellaire 22 comporte une partie supérieure 52 d'orientation axiale, dite de glissement, à section en forme de C qui est reçue et verrouillée dans le logement 16 associé, qui comporte une première aile 24 inférieure de glissement, d'orientation générale sensiblement horizontale, qui est interposée entre la branche 42 de glissement d'un ressort 40 de patin de frein 12, et la face inférieure 34 du logement 16.

La partie supérieure 52 de l'élément lamellaire 22 comporte une deuxième aile 25 supérieure d'appui vertical, d'orientation générale horizontale, qui est interposée entre la facette supérieure 36 de l'oreille 26 associée d'un patin de frein 12, et la face supérieure 32 du logement associé 16.

La partie supérieure de l'élément lamellaire 22 comporte une aile 27 de liaison, d'orientation verticale, qui relie ente elles les deux ailes horizontales 24 et 25, et qui est disposée entre l'oreille 26 du patin de frein et le fond vertical 23 du logement 16 associé.

L'élément lamellaire 22 comporte encore une partie 54 inférieure d'appui, d'orientation axiale, comportant une troisième aile 28 d'appui transversal qui prolonge l'aile 24 de glissement, qui s'étend dans un plan orthogonal au plan de l'aile 24 de glissement, qui est agencée au contact de la surface 20 de reprise d'appui transversal du bloc 14, et qui est à apte à former une butée transversale pour la facette inférieure associée 38 associée du patin de frein 12 associé.

Dans ce type de frein à disque, l'élément lamellaire 22 comporte donc une première aile inférieure 24 de glissement qui est théoriquement parallèle à la deuxième aile supérieure 25 d'appui vertical.

Par ailleurs la troisième aile 28 d'appui transversal, qui est agencée à l'extérieur du logement 16, est sensiblement orthogonale à la première aile inférieure 24 de glissement.

La première aile inférieure 24 de glissement comporte une languette 56 d'ancrage qui est ici découpée pour partie dans la première aile inférieure 24 et pour partie dans l'aile verticale de liaison 27, qui fait saillie vers le bas, et qui coopère avec la face inférieure 34 du logement 16 pour s'ancrer dans cette face inférieure 34 du logement 16, comme représenté aux figures 4, 7 et 8, pour ainsi immobiliser axialement l'élément lamellaire 22 par rapport au logement 16, et aussi pour garantir un contact plan sur plan entre l'aile 25 et la face supérieure 32 en vis-à-vis du logement associé 16.

Plus particulièrement, et comme on peut notamment le voir aux figures 3 et 4, la face inférieure 34 du logement 16 comporte une creusure, ou évidement 37 d'orientation générale transversale et de profil incurvé concave et qui s'étend selon une largeur axiale constante déterminée 11 inférieure à la largeur axiale 12 de la face inférieure 34.

De manière complémentaire, la languette d'ancrage 56 présente un profil incurvé dont la convexité est orientée vers le bas, et dont la largeur axiale 13 est sensiblement égale à celle 11 de l'évidement 37 de manière à permettre son ancrage dans l'évidement, et de manière à immobiliser axialement la languette d'ancrage 56 dans l'évidement 37, et donc l'immobilisation axiale de l'élément lamellaire 22 par rapport au logement 16 associé.

La conception de l'élément lamellaire 22 est susceptible d'induire une précharge du ressort 40 de patin de frein dès son introduction dans l'élément lamellaire 22 et de manière à assurer une raideur faible sur la troisième aile 28.

L'élément lamellaire 22 est déformable élastiquement entre :
* un état initial tel que représenté à la figure 7, préalable au montage dans le logement 16 de l'oreille 26 du patin de frein 12 munie de son ressort de patin 14, état initial dans lequel la première aile 24 de glissement forme, avec le plan de la face 34 inférieure du logement, un premier angle aigu "α", et
* un état de sollicitation tel que représenté à la figure 8, résultant du montage dans le logement 16 de l'oreille 26 du patin de frein 12 munie de son ressort 40 de patin, état de sollicitation dans lequel la première aile 24 de glissement forme, avec le plan de la face 34 inférieure du logement, un deuxième angle "β" aigu ou nul, dont la valeur est inférieure à celle du premier angle aigu "α", et état dans lequel la branche 42 de glissement du ressort de patin est précontrainte élastiquement.

Dans cette configuration, dans son état initial, la partie supérieure 52 axiale de glissement à section en forme de C de l'élément lamellaire 22 est sensiblement "refermée", la première aile 24 de glissement formant aussi un angle aigu avec tout plan parallèle à la deuxième aile 25 supérieure d'appui.

De même, la troisième aile d'appui transversal 28 forme un angle aigu avec la surface 20 de reprise d'appui transversal du bloc 14.

Dès lors que le ressort de patin 40 est introduit dans l'élément lamellaire 22, la première aile 24 de glissement forme un angle aigu réduit "β" avec tout plan parallèle à la deuxième aile 25 supérieure d'appui vertical.

De même, la troisième aile d'appui transversal 28 forme un angle aigu avec la surface 20 de reprise d'appui transversal du bloc 14.

Le ressort de patin 40 est alors soumis à une précharge de la part de la première aile 24 de glissement, ce qui permet d'assurer une charge minimale et/ou précontrainte du ressort 40 de patin de frein lorsque le patin de frein 12 est soumis à un couple de rotation résultant du frottement du patin de frein sur le disque de frein.

Enfin, dans les cas extrêmes de sollicitation du ressort de patin 40 par le patin de frein 12, et notamment lorsque le patin de frein tend à se déplacer transversalement/horizontalement selon la direction "T", l'effort exercé tend à plaquer la troisième aile d'appui transversal 28 en appui plan contre la surface 20 de reprise d'appui transversal du bloc 14, garantissant ainsi un contact plan/plan à même de reprendre au mieux les efforts, à basse pression de freinage, du fait des angles mentionnés ci-dessus.

Dans un mode de réalisation de l'invention, un plan médian transversal passant sensiblement par les oreilles 26 du patin de frein 12 passe sensiblement par un point médian d'application des efforts de freinage du patin de frein 12 sur le disque de frein.

Par ailleurs, la face verticale 20 et l'aile 28 de l'élément lamellaire sont agencées sous ce point médian d'application des d'efforts de freinage du patin de frein sur le disque.

Cet agencement permet de déterminer sensiblement le positionnement point d'application des efforts de réaction des blocs 14 sur le patin de frein 12, et donc de déterminer le couple de réaction qui s'exerce autour du point médian d'application des d'efforts de freinage du patin de frein 12 sur le disque.

Ainsi, le couple total auquel est soumis le patin de frein 12, résultant du couple exercé par le disque sur le patin de frein 12 et du couple de réaction exercé par les blocs 14 sur le patin de frein 12, est toujours orienté dans le même sens, ce qui garantit la stabilité du patin de frein 12 lors du freinage.

La languette d'ancrage 56 est découpée de façon à être indépendante de l'aile de glissement, ce qui permet de choisir les valeurs des angles "α" et "β" sans compromettre le bon positionnement de l'élément lamellaire dans son logement.

L'instabilité du patin de frein et le risque de bruits et/ou vibrations associés sont favorisés par une augmentation de la raideur ou rigidité, et par suite de l'intensité de la force de rappel exercé par la troisième aile 28 alors que, au contraire, le patin de frein est stabilisé pour des forces de freinage "moyennes" ou "fortes" du fait de l'entraînement du patin de frein par la rotation du disque.

Avantageusement, cette raideur limitée résulte de la géométrie de l'élément lamellaire notamment de l'angle "β". Elle peut aussi résulter d'une découpe comme cela sera décrit par la suite.

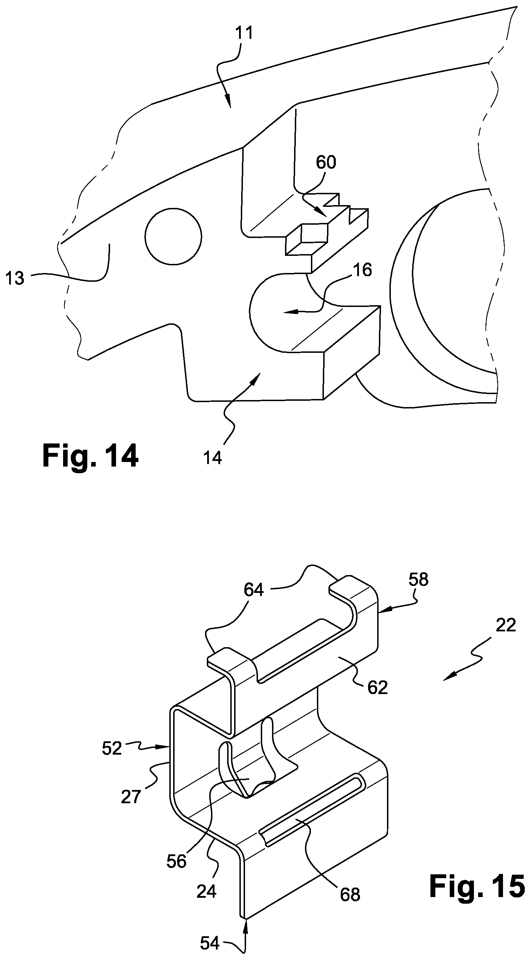

On décrira maintenant la variante de réalisation illustrée aux figures 14 et 15.

Comme l'illustre la figure 15, pour garantir une mise en position optimale de la troisième aile d'appui transversale contre la surface 20 de reprise d'appui transversal du bras 14, une arête 66, de raccordement de l'aile 24 de glissement avec l'aile d'appui transversal 28, peut comporter au moins une découpe 68 axiale.

Cette découpe permet de réduire la raideur angulaire de l'arête 66 afin de favoriser le déploiement ou "ouverture" de l'aile d'appui transversal.

La découpe axiale 68 s'étend ici symétriquement le long de l'arête de raccordement 66 et suivant la majeure partie de la largeur, selon la direction axiale, de l'arête 66 de raccordement.

Cette découpe peut être réalisée de la même manière et dans le même but dans un élément lamellaire 22 du type de celui illustré aux figures 5 et 6.

De la même manière que pour l'élément lamellaire 22 précédemment décrit, il est prévu une languette ou patte 56 de fixation ou d'ancrage qui fait saillie verticalement vers le bas, et qui coopère avec la face inférieure 34 du logement 16 pour s'ancrer sur cette face inférieure 34 du logement 16, face 34 qui est ici « lisse » car dépourvue d'évidement.

L'élément lamellaire 22 comporte ici une partie supérieure 58 d'immobilisation axiale, qui prolonge la deuxième aile 25 vers le haut, et qui coopère avec une partie 60 complémentaire du bloc 14 pour immobiliser axialement l'élément lamellaire 22 par rapport au bloc 14.

Comme l'illustrent les figures 14 et 15, la partie 60 complémentaire du bloc est conformée en un plot de longueur axiale inférieure à celle du logement 16 et du bloc 14, et la partie 58 d'immobilisation de l'élément lamellaire 22 comporte pour l'essentiel une quatrième aile verticale 62 à partir de laquelle s'étendent deux pattes 64 qui enserrent axialement la partie 60 en forme de plot qui constitue une butée axiale avec laquelle coopèrent les deux pattes opposées 64.

On décrira maintenant un procédé d'assemblage d'un frein à disque selon l'invention.

Ce procédé d'assemblage comporte une première étape au cours de laquelle on met en place et on verrouille les éléments 22 lamellaires dans les logements associés 16 des blocs 14 de l'étrier 11.

Le procédé comporte une deuxième étape suivante au cours de laquelle on fixe les ressorts de patin 40 au patin de frein 12, les branches incurvées 48 étant agencées du même côté du patin de frein 12.

Ensuite, le procédé comporte une troisième étape au cours de laquelle on introduit le patin de frein 12, préalablement équipé de ses deux ressorts de patin 40 dans les logements 16 des blocs 14 de l'étrier 11 en faisant pénétrer en premier les branches incurvées 48 des ressorts de patin 40, pour que ces branches 48 des ressorts de patin 40 sollicitent les éléments lamellaires 22 en écartant les premières ailes inférieures 24 de glissement des deuxièmes ailes d'appui 25 vertical, et pré-contraignent ainsi les ressorts de patin 40.

Après assemblage, les deux demi-boîtiers peuvent être vissés l'un à l'autre pour constituer le boîtier complet 11.

D'une manière similaire, un procédé de remplacement d'un patin de frein 12 est associé au frein à disque selon l'invention.

L'invention permet de proposer un frein à disque dont les mouvements intempestifs des patins de frein 12 sont supprimés, ce qui permet de stabiliser les patins de frein 12 et garantit une longévité accrue des garnitures de friction des patins de frein 12, tout en limitant les bruits de freinage.

De plus la conception des moyens de montage et de guidage en coulissement axial de chaque patin de frein par rapport au boîtier fixe permettent de dégager de l'espace libre dans la voûte de l'étrier, et l'architecture selon l'invention permet notamment d'y loger éventuellement un pont longitudinal supplémentaire de matière pour en augmenter encore la rigidité et, si nécessaire d'y ajouter une vis axiale de fixation.

## Revendications

1. Frein à disque de véhicule automobile à étrier fixe (10) comportant :
- un disque,
- un boîtier (11) d'étrier qui chevauche le disque,
- au moins un patin de frein (12) qui est apte à coopérer avec une face latérale en vis à vis du disque de frein,
- et au moins un piston (8) qui est monté coulissant axialement dans un cylindre (7) complémentaire du boîtier et qui coopère avec ledit patin de frein (12) pour le solliciter axialement en direction de ladite face latérale du disque frein,
**caractérisé en ce que** :
a) le boîtier (11) d'étrier comporte deux blocs opposés (14), avant et arrière respectivement, dont chacun comporte :
• un logement (16) axial à section en forme de C, ouvert horizontalement en direction du bloc (14) opposé, qui est délimité par une face (32) supérieure et par une face (34) inférieure d'orientation générale horizontale ;
• une surface (20) axiale de reprise d'appui, d'orientation générale verticale (V), qui est agencée sous le logement (16);
b) le patin (12) de frein comporte :
• deux oreilles (26) latérales opposées de montage dont chacune est reçue dans un logement (16) associé d'un bloc (14) associé du boîtier de l'étrier (11), et dont chacune est délimitée par une facette (36) supérieure d'orientation générale horizontale ;
• associée à chaque oreille (26), une facette inférieure (38), d'orientation verticale, qui est située en dessous de l'oreille latérale (26) associée ;
c) des moyens (40, 22) de montage et de guidage en coulissement axial du patin de frein par rapport au boîtier fixe sont prévus qui comportent :
i) pour chaque oreille (26) du patin (12) de frein, un ressort (40) de patin qui est fixé à l'oreille (26) associée du patin de frein (12) et qui comporte au moins une branche inférieure (42) de glissement qui coopère avec la face inférieure (34) du logement (16) associé et qui sollicite ladite facette (36) supérieure de l'oreille (26) en appui verticalement vers le haut contre la face supérieure (32) du logement (16) associé ;
ii) pour chaque bloc (14) du boîtier de l'étrier (11), un élément lamellaire (22) en acier à ressort, qui comporte au moins :
• une partie (52) supérieure axiale de glissement à section en forme de C qui est reçue et verrouillée dans le logement (16) associé, qui comporte une première aile (24) inférieure, dite aile de glissement, d'orientation générale sensiblement horizontale, qui est interposée entre la branche (42) de glissement du ressort de patin (40) et la face (34) inférieure du logement (16) de l'étrier (11), et une deuxième aile (25) supérieure, dite aile d'appui vertical, d'orientation générale horizontale, qui est interposée entre la facette supérieure (36) de l'oreille (26) associée du patin (12) de frein et la face supérieure (32) du logement (12) associé ; et
• au moins une partie (54) inférieure axiale d'appui comportant une troisième aile (28), dite aile d'appui transversal, qui prolonge l'aile (24) de glissement, qui s'étend dans un plan orthogonal au plan de l'aile (24) de glissement, qui est agencée au contact de la surface (20) de reprise d'appui transversal du bloc associé (14), et qui est à apte à former une butée transversale pour la facette inférieure (38) associée du patin (12) de frein,
dans lequel l'élément lamellaire (22) est déformable élastiquement entre :
- un état initial, préalable au montage dans le logement (16) de l'oreille (26) du patin de frein (12) munie de son ressort (40) de patin, dans lequel l'aile (24) de glissement forme, avec le plan de la face inférieure (34) du logement (16), un premier angle aigu (α),
- au moins un état de sollicitation, consécutif au montage dans le logement (16) de l'oreille (26) du patin de frein (12) munie de son ressort (40) de patin, dans lequel l'aile (24) de glissement forme, avec le plan de la face inférieure (34) du logement (16), un deuxième angle aigu (β) ou nul, dont la valeur est inférieure à celle du premier angle aigu (β), et dans lequel ladite branche (42) de glissement du ressort de patin (40) est précontrainte élastiquement.

2. Frein à disque selon la revendication précédente, **caractérisé en ce que** l'aile (24) de glissement comporte une languette (56) d'ancrage qui fait saillie vers le bas et qui coopère avec la face inférieure (34) du logement (16) pour s'ancrer dans cette face (34) inférieure et verrouiller la partie supérieure (52) en position montée dans le logement (16) associé.

3. Frein à disque selon la revendication 2, **caractérisé en ce que** la face inférieure (34) du logement (16) comporte un évidement (37) dans lequel la languette d'ancrage (56) est reçue, sans jeu selon la direction axiale, pour immobiliser axialement l'élément lamellaire (22) par rapport au bloc (14).

4. Frein à disque selon l'une quelconque des revendications 1 à 2, **caractérisé en ce que** l'élément lamellaire (22) comporte une partie (58) d'immobilisation axiale, qui prolonge la deuxième aile (25) d'appui vertical vers le haut, qui coopère avec une partie (60) complémentaire du bloc (14) pour immobiliser axialement l'élément lamellaire (22) par rapport au bloc (14).

5. Frein à disque selon l'une quelconque des revendications précédentes, **caractérisé en ce qu'**une arête (66) de raccordement de l'aile (24) de glissement avec l'aile (28) d'appui transversal comporte au moins une découpe axiale (68).

6. Frein à disque selon l'une quelconque des revendications précédentes, **caractérisé en ce que** l'élément lamellaire (22) présente une symétrie de conception par rapport à un plan vertical et transversal médian.

7. Frein à disque selon l'une quelconque des revendications précédentes, **caractérisé en ce que** chaque ressort de patin (40) comporte au moins une branche incurvée (48) qui s'étend suivant la direction axiale et qui relie sa branche (42) de glissement à une branche (46) de fixation du patin de frein sur l'oreille (12) du patin de frein.

8. Frein à disque selon l'une quelconque des revendications précédentes, **caractérisé en ce que** le boîtier (11) d'étrier comporte deux demi-boîtiers dont chacun est délimité par une face de jonction (13), d'orientation verticale et transversale, et **en ce que** les deux demi-boîtiers sont fixés l'un à l'autre par une série de vis axiales (80) de fixation.

9. Frein à disque selon la revendication précédente, **caractérisé en ce que** le boîtier (11) d'étrier et les moyens de montage et de guidage des patins de frein présentent une symétrie générale de conception par rapport à ladite face de jonction (13).

10. Procédé d'assemblage d'un frein à disque selon les revendications 1 à 7 prises en combinaison, **caractérisé en ce qu'**il comporte :
- une première étape au cours de laquelle on verrouille les éléments lamellaires (22) dans les logements (16) associés des blocs (14) de l'étrier (11),
- une deuxième étape au cours de laquelle on fixe les ressorts de patin (40) au patin de frein (12), les branches incurvées (48) étant agencées d'un même côté du patin de frein (12),
- une troisième étape au cours de laquelle on introduit le patin de frein (12) équipé de ses deux ressorts de patin (40) dans les logements (16) des blocs (14) de l'étrier (11) en faisant pénétrer en premier les branches incurvées (48) des ressorts de patin (40) pour que lesdites branches desdits ressorts de patin (40) sollicitent les éléments lamellaires associés (22) en écartant les première ailes inférieures (24) de glissement des deuxièmes ailes (25) d'appui vertical.

11. Procédé de remplacement d'un patin de frein d'un frein à disque selon les revendications 1 à 7 prises en combinaison, **caractérisé en ce qu'**il comporte :
- une première étape au cours de laquelle on comprime les branches incurvées (48) des ressorts de patin (40),
- une deuxième étape au cours de laquelle on extrait le patin de frein (12) muni de ses ressorts de patin (40) hors des logements (16) des blocs (14) de l'étrier (11),
- une troisième étape au cours de laquelle on introduit un nouveau patin de frein (12) dont les oreilles (26) sont équipées de deux ressorts de patin (40) dans les logements (16) des blocs (14) de l'étrier en faisant pénétrer en premier les branches incurvées (48) des ressorts de patin (14) pour que lesdites branches (48) desdits ressorts de patin (40) sollicitent les éléments lamellaires (22) en en écartant les premières ailes inférieures (24) de glissement des deuxième ailes (25) d'appui vertical.

## Patentansprüche

1. Scheibenbremse für ein Automobilfahrzeug mit festem Sattel (10), umfassend:
- eine Scheibe,
- ein Sattelgehäuse (11), das die Scheibe überlappt,
- wenigstens einen Bremsklotz (12), der dazu ausgelegt ist, mit einer lateralen Fläche gegenüber der Bremsscheibe zusammenzuwirken,
- und wenigstens einen Kolben (8), der axial verschiebbar in einem komplementären Zylinder (7) des Gehäuses montiert ist, und der mit dem Bremsklotz (12) zusammenwirkt, um ihn axial in Richtung der lateralen Fläche der Bremsscheibe zu beaufschlagen,
**dadurch gekennzeichnet, dass**:
a) das Sattelgehäuse (11) zwei entgegengesetzte Blöcke (14) umfasst, einen vorderen beziehungsweise einen hinteren, von denen jeder umfasst:
• eine axiale Aufnahme (16) mit C-förmigem Querschnitt, die horizontal in Richtung des entgegengesetzten Blocks (14) offen ist, die durch eine obere Fläche (32) und durch eine untere Fläche (34) mit im Wesentlichen horizontaler Orientierung begrenzt ist;
• eine axiale Oberfläche (20) zur Wiederherstellung einer Abstützung mit im Wesentlichen vertikaler Orientierung (V), die unter der Aufnahme (16) angeordnet ist;
b) der Bremsklotz (12) umfasst:
• zwei entgegengesetzte lateralen Montageösen (26), von denen jede in einer zugeordneten Aufnahme (16) eines zugeordneten Blocks (14) des Sattelgehäuses (11) aufgenommen ist, und von denen jede durch eine obere Facette (36) mit im Wesentlichen horizontaler Orientierung begrenzt ist;
• jeder Öse (26) zugeordnet, eine untere Facette (38) mit vertikaler Orientierung, die unter der zugeordneten lateralen Öse (26) angeordnet ist;
c) wobei Mittel (40, 22) zur Montage und zur Führung des Bremsklotzes bei Axialverschiebung bezüglich des festen Gehäuses vorgesehen sind, die umfassen:
i) für jede Öse (26) des Bremsklotzes (12), eine Klotzfeder (40), die an der zugeordneten Öse (26) des Bremsklotzes (12) befestigt ist, und die wenigstens einen unteren Gleitarm (42) umfasst, der mit der unteren Fläche (34) der zugeordneten Aufnahme (16) zusammenwirkt, und der die obere Facette (36) der Öse (26) zur Abstützung vertikal nach oben gegen die obere Fläche (32) der zugeordneten Aufnahme (16) beaufschlagt;
ii) für jeden Block (14) des Sattelgehäuses (11), ein Lamellenelement (22) aus Federstahl, das wenigstens umfasst:
• einen oberen axialen Gleitteil (52) mit C-förmigem Querschnitt, der in der zugeordneten Aufnahme (16) aufgenommen und verriegelt ist, der einen ersten unteren Flügel (24) umfasst, genannt Gleitflügel, mit im Wesentlichen allgemeiner horizontaler Orientierung, der zwischen dem Gleitarm (42) der Klotzfeder (40) und der unteren Fläche (34) der Aufnahme (16) des Sattels (11) eingefügt ist, sowie einen zweiten oberen Flügel (25), genannt Vertikalabstützflügel, mit im Wesentlichen horizontaler Orientierung, der zwischen der oberen Facette (36) der zugeordneten Öse (26) des Bremsklotzes (12) und der oberen Fläche (32) der zugeordneten Aufnahme (12) eingefügt ist; und
• wenigstens einen unteren axialen Abstützteil (54), umfassend einen dritten Flügel (28), genannt Transversalabstützflügel, der den Gleitflügel (24) verlängert, der sich in einer Ebene orthogonal zur Ebene des Gleitflügels (24) erstreckt, der in Kontakt mit der Oberfläche (20) zur Wiederherstellung einer Transversalabstützung des zugeordneten Blocks (14) angeordnet ist, und der dazu ausgelegt ist, einen Transversalanschlag für die zugeordnete untere Facette (38) des Bremsklotzes (12) zu bilden,
wobei das Lamellenelement (22) elastisch verformbar ist zwischen:
- einem Anfangszustand vor der Montage in der Aufnahme (16) der Öse (26) des Bremsklotzes (12), der mit seiner Klotzfeder (40) ausgestattet ist, wobei der Gleitflügel (24) mit der Ebene der unteren Fläche (34) der Aufnahme (16) einen ersten spitzen Winkel (α) bildet,
- wenigstens einem Beaufschlagungszustand im Anschluss an die Montage in der Aufnahme (16) der Öse (26) des Bremsklotzes (12), der mit seiner Klotzfeder (40) ausgestattet ist, wobei der Gleitflügel (24) mit der Ebene der unteren Fläche (34) der Aufnahme (16) einen zweiten spitzen oder Null-Winkel (β) bildet, dessen Wert kleiner ist als jener des ersten spitzen Winkels (α), und wobei der Gleitarm (42) der Klotzfeder (40) elastisch vorgespannt ist.

2. Scheibenbremse nach dem vorhergehenden Anspruch, **dadurch gekennzeichnet, dass** der Gleitflügel (24) eine Verankerungszunge (56) umfasst, die nach unten vorsteht und die mit der unteren Fläche (34) der Aufnahme (16) zusammenwirkt, um sich in dieser unteren Fläche (34) zu verankern und den oberen Teil (52) in der montierten Position in der zugeordneten Aufnahme (16) zu verriegeln.

3. Scheibenbremse nach Anspruch 2, **dadurch gekennzeichnet, dass** die untere Fläche (34) der Aufnahme (16) eine Aussparung (37) umfasst, in der die Verankerungszunge (56) ohne Spiel in der axialen Richtung aufgenommen ist, um das Lamellenelement (22) axial bezüglich des Blocks (14) zu immobilisieren.

4. Scheibenbremse nach einem der Ansprüche 1 bis 2, **dadurch gekennzeichnet, dass** das Lamellenelement (22) einen Axialimmobilisierungsteil (58) umfasst, der den zweiten Abstützflügel (25) vertikal nach oben verlängert, der mit einem komplementären Teil (60) des Blocks (14) zusammenwirkt, um das Lamellenelement (22) axial bezüglich des Blocks (14) zu immobilisieren.

5. Scheibenbremse nach einem der vorhergehenden Ansprüche, **dadurch gekennzeichnet, dass** eine Kante (66) zur Verbindung des Gleitflügels (24) mit dem Transversalabstützflügel (28) wenigstens eine axiale Ausschneidung (68) umfasst.

6. Scheibenbremse nach einem der vorhergehenden Ansprüche, **dadurch gekennzeichnet, dass** das Lamellenelement (22) eine Gestaltungssymmetrie bezüglich einer vertikalen und transversalen Mittelebene aufweist.

7. Scheibenbremse nach einem der vorhergehenden Ansprüche, **dadurch gekennzeichnet, dass** jede Klotzfeder (40) wenigstens einen gekrümmten Arm (48) umfasst, der sich entlang der axialen Richtung erstreckt, und der ihren Gleitarm (42) mit einem Arm (46) zur Befestigung des Bremsklotzes an der Öse (12) des Bremsklotzes verbindet.

8. Scheibenbremse nach einem der vorhergehenden Ansprüche, **dadurch gekennzeichnet, dass** das Sattelgehäuse (11) zwei Halbgehäuse umfasst, von denen jedes durch eine Anschlussfläche (13) mit vertikaler und transversaler Orientierung begrenzt ist, und dass die zwei Halbgehäuse durch eine Reihe von Axialbefestigungsschrauben (80) aneinander befestigt sind.

9. Scheibenbremse nach dem vorhergehenden Anspruch, **dadurch gekennzeichnet, dass** das Sattelgehäuse (11) und die Mittel zur Montage und zur Führung der Bremsklötze eine allgemeine Gestaltungssymmetrie bezüglich der Anschlussfläche (13) aufweisen.

10. Verfahren zum Zusammenfügen einer Scheibenbremse nach den Ansprüchen 1 bis 7 in Kombination, **dadurch gekennzeichnet, dass** es umfasst:
- einen ersten Schritt, in dessen Verlauf man die Lamellenelemente (22) in den zugeordneten Aufnahmen (16) der Blöcke (14) des Sattels (11) verriegelt,
- einen zweiten Schritt, in dessen Verlauf man die Klotzfedern (40) am Bremsklotz (12) befestigt, wobei die gekrümmten Arme (48) auf ein und derselben Seite des Bremsklotzes (12) angeordnet sind,
- einen dritten Schritt, in dessen Verlauf man den mit seinen beiden Klotzfedern (40) ausgestatteten Bremsklotz (12) in die Aufnahmen (16) der Blöcke (14) des Sattels (11) einführt, wobei man zunächst die gekrümmten Arme (48) der Klotzfedern (40) eindringen lässt, damit die Arme der Klotzfedern (40) die zugeordneten Lamellenelemente (22) beaufschlagen und dabei die ersten unteren Gleitflügel (24) von den zweiten Vertikalabstützflügeln (25) beabstanden.

11. Verfahren zum Ersetzen eines Bremsklotzes einer Scheibenbremse nach den Ansprüchen 1 bis 7 in Kombination, **dadurch gekennzeichnet, dass** es umfasst:
- einen ersten Schritt, in dessen Verlauf man die gekrümmten Arme (48) der Klotzfedern (40) komprimiert,
- einen zweiten Schritt, in dessen Verlauf man den mit seinen Klotzfedern (40) ausgestatteten Bremsklotz (12) aus den Aufnahmen (16) der Blöcke (14) des Sattels (11) herausnimmt,
- einen dritten Schritt, in dessen Verlauf man einen neuen Bremsklotz (12), dessen Ösen (26) mit zwei Klotzfedern (40) ausgestattet sind, in die Aufnahmen (16) der Blöcke (14) des Sattels einführt, wobei man zunächst die gekrümmten Arme (48) der Klotzfedern (14) eindringen lässt, damit die Arme (48) der Klotzfedern (40) die Lamellenelemente (22) beaufschlagen und hierbei die ersten unteren Gleitflügel (24) von den zweiten Vertikalabstützflügeln (25) beabstanden.

## Claims

1. Disk brake for a motor vehicle with fixed stirrup (10) comprising;
- a disk,
- a stirrup casing (11) that overlaps the disk,
- at least one brake pad (12) that can cooperate with a side face facing the brake disk,
- and at least one piston (8) that is mounted free to slide axially in a cylinder (7) complementary to the casing and that cooperates with said brake pad (12) to apply a force to it in the axial direction towards said lateral face of the brake disk,
**characterised in that**
a) the stirrup casing (11) comprises two opposite blocks (14), the front and the back blocks respectively, each of which comprises:
-- an axial housing (16) with a C-shaped section, open horizontally towards the opposite block (14) that is delimited by an upper face (32) and by a lower face (34) generally in the horizontal direction;
-- an axial thrust resistance surface (20), generally in the vertical direction (V) that is formed under the housing (16);
b) the brake pad (12) comprises:
-- two opposite lateral mounting lugs (26), each of which fits into a housing (16) associated with a block (14) associated with the stirrup casing (11), each of which is delimited by an upper facet (36) generally in the horizontal direction;
-- associated with each lug (26), an inner facet (38) generally in the vertical direction, that is located under the associated lateral lug (26),
c) means (40, 22) are provided for assembly and guidance of the brake pad free to slide axially relative to the fixed casing, comprising:
i) for each lug (26) of the brake pad (12), a pad spring (40) that is fixed to the lug (26) associated with the brake pad (12) and that comprises at least one lower sliding branch (42) that cooperates with the lower face (34) of the associated housing (16) and the applies a force to said upper facet (36) of the lug (26) that bears vertically upwards in contact with the upper face (32) of the associated housing (16);
ii) for each block (14) of the stirrup casing (11), a lamellar element (22) made of spring steel, that comprises at least:
-- an upper axial sliding part (52) with a C-shaped section that fits into and is locked in the associated housing (16), that comprises a first lower flange (24) called the sliding flange, generally in the approximately horizontal direction, that is inserted between the sliding branch (42) of the pad spring (40) and the lower face (34) of the housing (16) of the stirrup (11) and a second upper flange (25) called the vertical thrust flange, generally in the horizontal direction, inserted between the upper facet (36) of the lug (26) associated with the brake pad and the upper face (32) of the associated housing (12); and
-- at least one lower axial thrust resistance part (54) comprising a third flange (28), called the transverse thrust force, that prolongs the sliding flange (24) and that extends in a plane orthogonal to the plane of the sliding flange (24), that is arranged in contact with the transverse thrust resistance surface (20) of the associated block (14) and that can form a transverse stop for the lower facet (38) associated with the brake pad (12),
wherein the lamellar element (22) is elastically deformable between:
-- an initial state prior to assembly of the lug (26) of the brake pad (12) fitted with its pad spring (40) into the housing (16), in which there is a first acute angle (α) between the sliding flange (24) and the plane of the lower face (34) of the housing (16);
-- at least one loaded state subsequent to assembly of the lug (26) of the brake pad (12) fitted with its pad spring (40) into the housing (16), in which there is a second acute angle (β) or angle equal to zero between the sliding flange (24) and the plane of the lower face (34) of the housing (16), with a value less than the value of the first acute angle (α), and in which said sliding branch (42) of the pad spring (40) is elastically prestressed.

2. Disk brake according to the previous claim, **characterised in that** the sliding flange (24) comprises an anchor cleat (56) that projects downwards and that cooperates with the lower face (34) of the housing (16) to be anchored in this lower face (34) and lock the upper part (52) into position assembled in the associated housing (16).

3. Disk brake according to claim 2, **characterised in that** the lower face (34) of the housing (16) comprises a recess (37) inside which the anchor cleat (56) fits, without any play in the axial direction, to fix the lamellar element (22) into place in the axial direction relative to the block (14).

4. Disk brake according to any one of claims 1 to 2, **characterised in that** the lamellar element (22) comprises an axial immobilisation par (58), that prolongs the second vertical bearing flange (25) upwards, that cooperates with the complementary part (60) of the block (14) to fix the lamellar element (22) in the axial direction relative to the block (14).

5. Disk brake according to any one of the previous claims, **characterised in that** an edge (66) connecting the sliding flange (24) with the transverse bearing flange (28) comprises at least one axial cutout (68).

6. Disk brake according to any one of the previous claims, **characterised in that** the design of the lamellar element (22) is symmetrical about a median vertical and transverse plane.

7. Disk brake according to any one of the previous claims, **characterised in that** each pad spring (40) comprises at least one curved branch (48) that extends along the axial direction and that connects its sliding branch (42) to a branch (46) fixing the brake pad onto the brake pad lug (12).

8. Disk brake according to any one of the previous claims, **characterised in that** the stirrup casing (11) comprises two half-casings, each of which is delimited by a junction face (13) oriented vertically and transversely, and **in that** the two half-casings are fixed to each other by a series of axial attachment screws (80).

9. Disk brake according to the previous claim, **characterised in that** the design of the stirrup casing (11) and the brake pad assembly and guidance means is generally symmetrical about said junction face (13).

10. Method of assembling a disk brake according to claims 1 to 7 in combination, **characterised in that** it comprises:
- a first step during which the lamellar elements (22) are locked in the housings (16) associated with the blocks (14) of the stirrup (11),
- a second step during which the pad springs (40) are fixed to the brake pad (12), the curved branches (48) being arranged on the same side of the brake pad (12),
- a third step during which the brake pad (12), fitted with its two pad springs (40) is inserted into the housings (16) of the blocks (14) of the stirrup (11), allowing the curved branches (48) of the pad springs (40) to penetrate first so that said branches of said pad springs (40) apply a force to the associated lamellar elements (22), separating the first lower sliding flanges (24) from the second vertical thrust flanges (25).

11. Method of replacing a brake pad of a disk brake according to claims 1 to 7 in combination, **characterised in that** it comprises:
- a first step during which the curved branches (48) of the pad springs (40) are compressed,
- a second step during which the brake pad (12) fitted with its pad springs (40) is extracted from the housings (16) of the blocks (14) of the stirrup (11),
- a third step during which a new brake pad (12) of which the lugs (26) are fitted with two pad springs (40) is inserted into the housings (16) of the stirrup blocks (14), allowing the curved branches (48) of the pad springs (14) to penetrate first so that said branches (48) of said pad springs (40) apply a force to the lamellar elements (22), separating the first lower sliding flanges (24) from the second vertical thrust flanges (25).
